Europäisches Patentamt

European Patent Office

Office européen des brevets

(19)

(11) **EP 0 629 308 B1**

(12) **EUROPÄISCHE PATENTSCHRIFT**

(45) Veröffentlichungstag und Bekanntmachung des Hinweises auf die Patenterteilung:
**04.12.1996 Patentblatt 1996/49**

(21) Anmeldenummer: **93905149.6**

(22) Anmeldetag: **02.03.1993**

(51) Int Cl.⁶: **G21C 9/004**, F16K 17/38

(86) Internationale Anmeldenummer:
**PCT/DE93/00180**

(87) Internationale Veröffentlichungsnummer:
**WO 93/18521 (16.09.1993 Gazette 1993/22)**

(54) **SICHERHEITSEINRICHTUNG GEGEN ÜBERDRUCKVERSAGEN EINES KERNREAKTOR-DRUCKBEHÄLTERS**

SAFETY DEVICE AGAINST THE FAILURE OF A NUCLEAR REACTOR PRESSURE VESSEL DUE TO OVERPRESSURE

DISPOSITIF DE PREVENTION DE DEFAILLANCE DUE A LA SURPRESSION DE LA CUVE SOUS PRESSION D'UN REACTEUR NUCLEAIRE

(84) Benannte Vertragsstaaten:
**CH DE ES FR LI SE**

(30) Priorität: **03.03.1992 DE 4206661**

(43) Veröffentlichungstag der Anmeldung:
**21.12.1994 Patentblatt 1994/51**

(73) Patentinhaber: **SIEMENS AKTIENGESELLSCHAFT**
**80333 München (DE)**

(72) Erfinder: **STOCKHAUSEN, Horst-Dieter**
**D-8500 Nürnberg 60 (DE)**

(56) Entgegenhaltungen:
**DE-A- 3 526 377          US-A- 2 742 179**
**US-A- 4 567 016**

# Beschreibung

Sicherheitseinrichtung gegen Überdruckversagen eines Kernreaktor-Druckbehälters

Die Erfindung bezieht sich auf eine Sicherheitseinrichtung gegen Überdruckversagen eines Kernreaktor-Druckbehälters bei ungenügender Kernkühlung.

Wird bei einem Kernkraftwerk im allgemeinen und bei einem Druckwasserreaktor-Kernkraftwerk im besonderen das äußerst unwahrscheinliche Versagen sämtlicher Kühleinrichtungen des Reaktorkerns unterstellt, so besteht die Gefahr, daß der Reaktorkern überhitzt wird. Bei einem Druckwasser-Kernkraftwerk wird ein unzulässiger Überdruck im Primärkreis durch das Druckhaltesystem mit Sprüh- und Abblaseeinrichtungen vermieden. Ein Abblasebehälter dient dazu, den beim Öffnen der Druckhalter-, Abblase- und Sicherheitsventile und der Volumenregelsytem-Sicherheitsventile abgeblasenen Dampf zu kondensieren. Der Abblasebehälter ist zu etwa zwei Drittel mit Wasser gefüllt, darüber befindet sich ein Stickstoff-Polster. Bei Druckwasserreaktoren herrscht im Primärkreis ein Druck von z.B. 158 bar (Normalbetrieb).

Die DE 35 26 377 A1 beschreibt einen Hochtemperaturreaktor mit einem Reaktordruckbehälter und einem als Federventil ausgebildeten Sicherheitsventil für die Druckbegrenzung in dem Reaktordruckbehälter bei Kernaufheizstörfällen. Der Reaktordruckbehälter ist innenseitig mit einem Liner ausgekleidet, der an ein Liner-Kühlsystem angeschlossen ist. Die Ventilfeder des Sicherheitsventiles besteht aus einem Material mit bei ansteigender Temperatur abnehmender Federkraft. Die Ventilfeder wird bei offenem Sicherheitsventil mit ausströmendem Gas beaufschlagt und ist zur Kühlung an das Liner-Kühlsystem angeschlossen.

Die Erfindung geht von der Überlegung aus, den Abblase-Ansprechdruck im Kühlkreis eines Kernreaktors, insbesondere im Primärkreis eines Druckwasserreaktors, temperaturabhängig wesentlich zu reduzieren, so daß im sehr unwahrscheinlichen Falle der Überhitzung des Reaktorkerns der Primärkreisdruck auf Werte unter 30 bar automatisch herabgesetzt wird. Folglich ist Aufgabe der Erfindung, eine Sicherheitseinrichtung zu schaffen, die die Erfüllung dieses Kriteriums gestattet und damit eine Barriere gegen Überdruckversagen des Kernreaktor-Druckbehälters bei Kernüberhitzung bildet.

Erfindungsgemäß wird die gestellte Aufgabe bei einer Sicherheitseinrichtung der eingangs genannten Art durch die folgenden Merkmale gelöst:

Eine in eine dem Primärdruck ausgesetzte Wand oder Rohrleitung des Druckbehälters eingesetzte differenzdruckbelastete Druckentlastungsarmatur weist ein in einem hohlen Führungszylinder längsverschieblich bewegbar gelagertes Verschlußstück auf, das ein als Hohlkörper ausgebildeter Differenzdruckkolben ist und das durch eine Schmelzlotarretierung in seiner Schließstellung abgedichtet gehalten, bei Erreichen einer oberen Grenztemperatur im Reaktorinneren dagegen, die zum Aufschmelzen der Schmelzlotarretierung aufgrund eines diese erreichenden Grenztemperatur-Wärmeflusses führt, in seine Öffnungsstellung bewegbar ist.

Vorteilhafte Weiterbildungen sind in den Ansprüchen 2 bis 9 angegeben. Die mit der Erfindung erzielbaren Vorteile sind vor allem darin zu sehen, daß bei Erreichen einer bestimmten Grenztemperatur im Reaktorkern, die deutlich unterhalb der Versagenstemperatur des Reaktordruckbehälters liegt, die Schmelzlotarretierung zum Aufschmelzen gebracht und so das Verschlußstück freigegeben wird. Durch den Systemdruck (Reaktordruck) wird der bevorzugt verwendete Differenzdruckkolben in seinem Führungszylinder bis zu einem Kolbenanschlag verschoben. Nach Erreichen des Kolbenanschlages wird der Systemdruck über den dabei geöffneten Abblasequerschnitt auf Werte unter 30 bar abgebaut. Eine vorteilhafte Ausführung der Sicherheitseinrichtung nach der Erfindung besteht in diesem Zusammenhang darin, daß die Druckentlastungsarmatur in die Wand einer Hauptkühlmittelleitung nahe dem Kernreaktor-Druckbehälter eingesetzt ist.

Eine andere vorteilhafte Ausführungsform besteht darin, daß die Druckentlastungsarmatur in die Wand des Druckbehälters in Höhe der Hauptkühlmittelleitungsstutzen und in Wandbereiche zwischen diese eingesetzt ist.

Gemäß einer bevorzugten Ausführungsform ist die Druckentlastungsarmatur an eine in einen Abblasebehälter mündende Abblaseleitung angeschlossen. Bei entsprechend geringeren Querschnittsabmessungen der Druckentlastungsarmatur und der an diese angeschlossenen Leitungen kann jedoch die Druckentlastungsleitung auch als Steuerleitung für ein gesondertes Abblaseventil ausgebildet sein. Als Schmelzlotlegierungen haben sich Silberlotlegierungen als besonders vorteilhaft erwiesen, die in einem Temperaturbereich bis ca. 700° C stabil und strahlungsresistent sind.

Im folgenden wird die Erfindung anhand zweier in der Zeichnung dargestellter Ausführungsbeispiele noch näher erläutert. Darin zeigt:

Figur 1 einen Kernreaktor-Druckbehälter im Axialschnitt mit einer Sicherheitseinrichtung nach der Erfindung, die eine in eine Hauptkühlmittelleitung eingebaute Druckentlastungsarmatur umfaßt;

Figur 2 die Einzelheit II aus Figur 1 der Druckentlastungsarmatur, vergrößert im Detail und

Figur 3 eine Dampfschaltung, bei der die Abblaseleitung der Druckentlastungsarmatur als Steuerleitung zur Ansteuerung eines Abblaseventils dient.

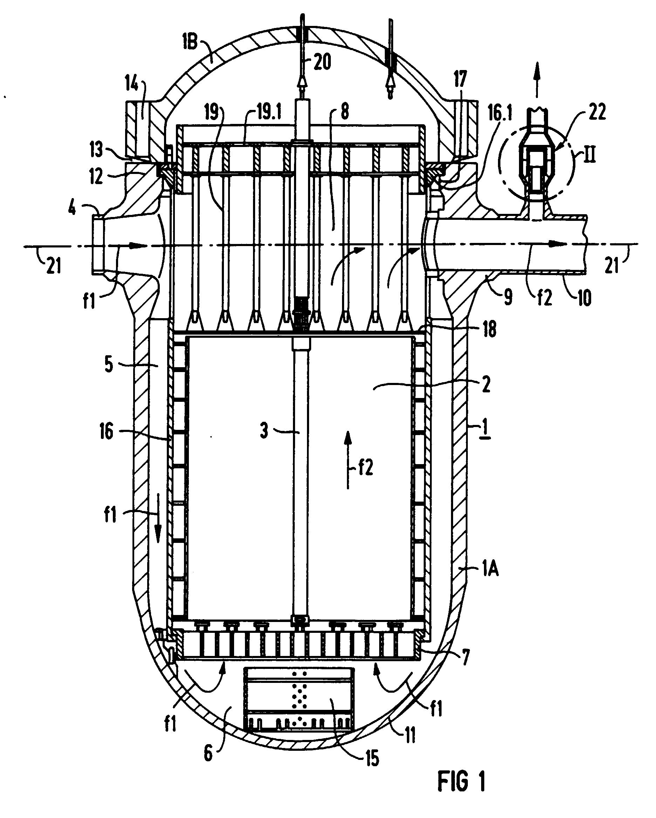

Der vereinfacht im Schnitt in Figur 1 dargestellte Kernreaktor-Druckbehälter 1 (im folgenden: Druckbehälter) eines Druckwasser-Kernkraftwerks ist z.B. für eine thermische Reaktorleistung von 3765 MW, entsprechend einer elektrischen Bruttoleistung von 1300 MW, ausgelegt. Der Reaktorkern 2, welcher aus Brennelementen zusammengesetzt ist, von welchen nur ein einzelnes 3 dargestellt ist, wird mit Leichtwasser gekühlt, das über Einlaßstutzen 4 eintritt und in einem Ringraum 5 abwärts strömt (vgl. Strömungspfeile f1). Vom unteren Plenum 6 strömt das Kühlwasser durch den perforierten unteren Rost 7 aufwärts durch die Kühlkanäle der Brennelemente 3, wärmt sich darin auf und fließt dann vom oberen Plenum 8 durch Auslaßstutzen 9 und die daran angeschlossene sogenannte heiße Primärkreisleitung 10 zu einem nicht dargestellten Dampferzeuger, wo es seine Wärme über wärmetauschende Rohre an das Sekundärkühlmittel abgibt. Die Kühlwasserströmung durch den Reaktorkern 2, das obere Plenum 8 und die Austrittsstutzen ist durch Strömungspfeile f2 verdeutlicht. Vom Dampferzeuger wird das gekühlte Kühlwasser, auch als Primärkühlmittel bezeichnet, über die sogenannte kalte Primärkreisleitung (nicht dargestellt) zum Eintrittsstutzen 4 des Druckbehälters 1 wieder zurückgepumpt, so daß sich im Normalbetrieb ein kontinuierlicher Kreislauf einstellt. Im Normalbetrieb steht das Primärkühlmittel im Primärkreis und damit auch innerhalb des Druckbehälters 1 unter einem Druck von ca. 158 bar, die Kühlmitteltemperatur am Austrittsstutzen 9 beträgt etwa 329 C. Der Reaktordruckbehälter 1 mit seinen Einbauten ist für diese Druck- und Temperaturbeanspruchung zuzüglich eines Sicherheitszuschlages ausgelegt. Er besteht aus einem topfförmigen Behälterunterteil 1A mit Bodenkalotte 11 und Ringflansch 12 an seinem oberen Ende, mit welchem der einen Gegenflansch 13 aufweisende gewölbte Deckel 1B dichtend verschraubt ist (die Deckelschrauben sind nicht dargestellt, lediglich Schraubendurchgangsöffnungen 14). Von den Einbauten seien nur die wichtigsten erwähnt: Eine untere Siebtonne 15, darüber der schon genannte untere Rost 7, welcher den Boden eines Kernbehälters 16 bildet. Letzterer ist mit einem Tragflansch 16.1 an einer Ringschulter 17 des Ringflansches 12 eingehängt und nimmt in seinem unteren Teil den Kern 2 mit den einzelnen Brennelementen 3 auf. Der Kern 2 ist durch eine obere Gitterplatte 18 abgedeckt, auf welcher sich ein Führungsgerüst 19 abstützt, welches eine obere Tragplatte 19.1 aufweist. In einen Teil der Brennelemente tauchen Steuerstäbe 20 ein, die von nicht näher dargestellten, oberhalb des Deckels 1B angeordneten Steuerstabantrieben abgesenkt oder angehoben werden können. Bei einer Vier-Loop-Anlage befinden sich über den Umfang des Druckbehälters 1 verteilt in der Ebene 21-21 abwechselnd vier Auslaßstutzen 9 und vier Einlaßstutzen 4. Das unter einem überkritischen Druck gehaltene und deshalb flüssige Primärkühlmittel bedeckt im Normalbetrieb nicht nur den Kern 2, sondern füllt auch das obere Plenum 8 etwa bis zur oberen Tragplatte 19.1 aus. Es ist deshalb eine wirksame Kühlung auch derjenigen Einbauten gewährleistet, die zwar selbst keine Wärme erzeugen (wie die Brennelemente 3), sondern durch Gamma-Strahlung einer sogenannten Gamma-Aufheizung unterliegen. Fällt der Wasserstand im Druckbehälter aufgrund eines sehr unwahrscheinlichen Ausfalls aller Kühl- und Notkühleinrichtungen, so beginnt die Bauteiltemperatur (normalerweise ca. 400° C) zu steigen, und Wärme wird insbesondere durch Strahlung und Leitung verstärkt an den Druckbehälter 1 abgegeben, insbesondere dann, wenn der Wasserstand bis zur oberen Gitterplatte 18 oder noch etwas darunter abgefallen ist. Diese Überhitzung wird in dem noch realtiv frühen Stadium von der Sicherheitseinrichtung nach der Erfindung ausgenutzt, ein Überdruckversagen des Druckbehälters 1 bei der erwähnten ungenügenden Kernkühlung mit Sicherheit zu verhindern.

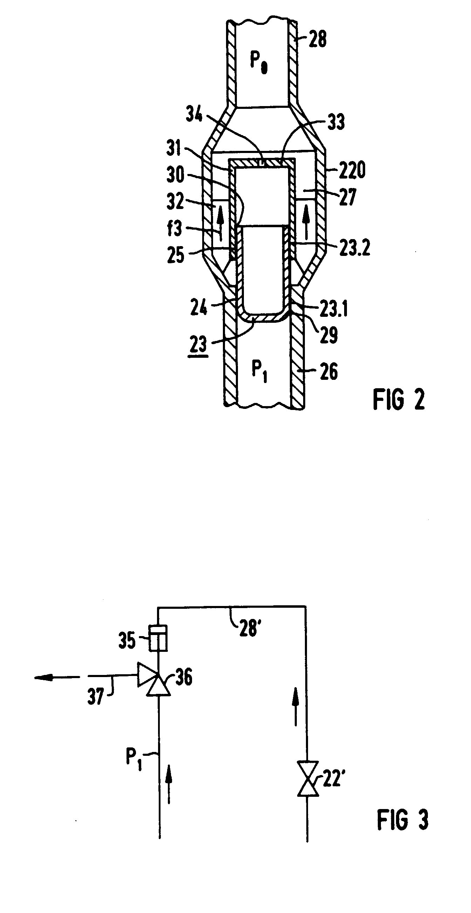

Hierzu ist eine in eine Rohrleitung des Druckbehälters 1 (dargestellt ist die heiße Hauptkühlmittelleitung 10 als Rohrleitung) eingesetzte differenzdruck-belastete Druckentlastungsarmatur 22 vorgesehen. Diese weist ein längsverschieblich beweglich gelagertes Verschlußstück, insbesondere einen Differenzdruckkolben 23 auf (vgl. die Darstellung nach Figur 2), der durch eine Schmelzlotarretierung 24, 25 in seiner (dargestellten) Schließstellung abdichtend gehalten wird. Bei Erreichen einer oberen Grenztemperatur im Reaktorinneren, die z.B. bei 700° C liegt, wird die Schmelzlotarretierung 24, 25 aufgrund eines sie erreichenden Grenztemperaturwärmeflusses aufgeschmolzen. Sie kann dann nicht mehr den auf sie wirkenden Scherkräften widerstehen, so daß der Differenzdruckkolben 23 aufgrund der an ihm angreifenden Differenzdruckkräfte in seine Offenstellung verlagert wird. Die Druckdifferenz ergibt sich zu

$$P = P1 - P_0, \text{ mit } P1 = \text{Innendruck}, P_0 = \text{Außendruck}.$$

Der im Innenraum des Druckbehälters 1 herrschende Druck P1 kann somit über den Anschlußrohrstutzen 26 und den geöffneten Querschnitt des Ringkanals 27 in die Abblaseleitung 28 im Zuge des Abblasestromes abgebaut werden, vgl. Pfeile f3. Die Schmelzlotarretierung 24 ist zwischen Dichtflächen 23.1 des Kolbens 23 und zugehörigen Sitzflächen 29 der Druckentlastungsarmatur 22 angebracht. Diese Sitzflächen 29 sind im dargestellten Beispiel von Innenumfangsflächen des Anschlußrohrstutzens 26 gebildet, der im Bereich der Sitzflächen mit einer zusätzlichen Armierung versehen sein kann. Diese Schmelzlotarretierung ist so ausgelegt, daß sie bei Normaltemperatur einem Differenzdruck von 160 bar leicht standhalten kann. Als zusätzliche Sicherheit ist eine weitere Schmelzlotarretierung 25 zwischen den Kolbenumfangsflächen 23.2 (am Eintauchende des Kolbens 23) und Führungsflächen 30 am Innenumfang eines Führungszylinders 31 angeordnet. Kolben 23 und Führungszylinder 31 sind vorzugsweise als Hohlkörper ausgebildet, weil dadurch der Wärmefluß ohne große Verluste und gezielt das Schmelzlot erreicht.

Der Führungszylinder 31 ist im Armaturengehäuse 220 zentriert so gehalten, daß zwischen seinem Außenumfang und dem Innenumfang des Armaturengehäuses 220 ein Ringraum bzw. Ringkanal 27 als Überströmkanal freibleibt. Im Ringraum sind den Führungszylinder 31 zentrisch halternde Leitflügel 32 angeordnet und mit der Armaturengehäusewand verbunden. Der Einlaßquerschnitt des Ringraumes bzw. Überströmkanals 27 wird, wie dargestellt, durch den Kolben 23 in dessen Normalstellung abgedichtet, dagegen in seiner Auslösestellung freigegeben. In der Auslösestellung ist der Kolben 23 vollständig in den Führungszylinder 31 eingetaucht. Zur Erzeugung des Differenzdrucks am Kolben 23 und zur Erleichterung der Eintauchbewegung ist der einen Boden 33 aufweisende Führungszylinder 31 mit einer Druckentlastungsöffnung 34 in seinem Boden versehen.

Wie erwähnt, ist die Druckentlastungsarmatur 22, wie dargestellt, in die Wand der Hauptkühlmittelleitung 10, und zwar der sogenannten heißen Primärkreisleitung, nahe dem Druckbehälter 1 eingesetzt. Eine alternative Ausführungsform bestünde darin, daß ein Anschlußrohrstutzen 26 der Druckentlastungsarmatur 22 in die Zylinderwand des Druckbehälters 1 in Höhe der Hauptkühlmittelleitungsstutzen 4, 9 (vgl. Figur 1) und zwar in einem Umfangszwischenraum zwischen diesen, eingesetzt ist (nicht dargestellt).

Die Druckentlastungsarmatur 22 kann auch als eine Drucksteuerarmatur 22' (vgl. Figur 3) ausgebildet sein. Diese hat entsprechend geringere Querschnittsabmessungen, und anstelle der Druckentlastungsleitung 28 ist eine Drucksteuerleitung 28' vorgesehen, welche an eine Steuerkolbeneinheit 35 eines Abblaseventils 36 angeschlossen ist. Dieses Abblaseventil 36 ist eingangsseitig an den Systemdruck P1 angeschlossen, welchen es normalerweise von einer zu einem nicht näher dargestellten Abblasebehälter führenden Leitung 37 absperrt. Erst bei Ansprechen der Steuerarmatur 22' im Falle einer Überhitzung des Druckbehälters 1 würde das Abblaseventil 36 geöffnet. Bei diesem Abblaseventil kann es sich um das bei konventionellen Kernreaktoranlagen ohnehin in der Nähe des Druckhalters an die Primärkreisleitung angeschlossenes Abblaseventil handeln.

Die Armatur 22' (in ihrer verkleinerten Ausführung als Drucksteuerarmatur) kann auch im Inneren des Druckbehälters 1 installiert sein, z.B. im Bereich des unteren Rostes 7 oder der oberen Gitterplatte 18, so daß sie noch näher zu eventuellen Heißstellen angeordnet ist und damit noch schneller anspricht. Die zugehörige Drucksteuerleitung 28' würde dann nach Art einer schlanken Meßleitung durch den Deckel 1B oder an einer Stelle zwischen den Ein- und Auslaßstutzen 4, 9 druckdicht nach außen hindurchgeführt.

Ob nun eine direkte Abblasefunktion (Figuren 1 und 2) oder eine indirekte Abblasefunktion im Überhitzungsfalle verwirklicht wird, beides bedeutet einen Sicherheitsgewinn, weil der Druck im Inneren des Druckbehälters 1 auf Werte kleiner als 30 bar abgesenkt wird. Dadurch wird garantiert, daß selbst im Falle des sogenannten Kernschmelzens und eines darauf unter Umständen folgenden Abschmelzens des Druckbehälterbodens die Trag- und Haltestruktur des Druckbehälters 1 wie auch die übrige Kernreaktor-Gebäudestruktur lediglich höchstens Auslegungskräften ausgesetzt werden. Da ein Kernschmelz-Störfall bei der Standard-Druckwasserreaktorbauform zu einer höchst unwahrscheinlichen Ereignis zählt, so kann die Abblasearmatur 22 bzw. 22' in den Leitungsstutzen 10 bzw. die Druckbehälterwand eingeschweißt sein. Es kann jedoch auch eine druckfeste Flanschverbindung vorgesehen sein, welche eine Inspektion der Schmelzlotstellen in bestimmten Zeitabständen (wenn der Druckbehälter wegen eines Brennelementwechsels ohnehin drucklos gemacht ist) gestattet.

## Patentansprüche

1. Sicherheitseinrichtung gegen Überdruckversagen eines Kernreaktor-Druckbehälters bei ungenügender Kernkühlung, mit den folgenden Merkmalen: eine in eine dem Primärdruck ausgesetzte Wand oder Rohrleitung (10) des Druckbehälters (1) eingesetzte differenzdruck-belastete Druckentlastungsarmatur (22) weist ein in einem hohlen Führungszylinder (31) längsverschieblich bewegbar gelagertes Verschlußstück (23) auf, welches ein als Hohlkörper ausgebildeter Differenzdruckkolben ist und welches durch eine Schmelzlotarretierung (24, 25) in seiner Schließstellung abgedichtet gehalten, bei Erreichen einer oberen Grenztemperatur im Reaktorinneren dagegen, die zum Aufschmelzen der Schmelzlotarretierung (24, 25) aufgrund eines diese erreichenden Grenztemperatur-Wärmeflusses führt, in seine Öffnungsstellung bewegbar ist.

2. Sicherheitseinrichtung nach Anspruch 1, **dadurch gekennzeichnet,** daß die Druckentlastungsarmatur (22) an eine in einen Abblasebehälter mündende Abblaseleitung (28) angeschlossen ist.

3. Sicherheitseinrichtung nach Anspruch 1, **dadurch gekennzeichnet,** daß die Schmelzlotarretierung (24) zwischen Dichtflächen (23.1) des Verschlußstückes (23) und zugehörigen Sitzflächen (29) der Druckentlastungsarmatur (22) angebracht ist.

4. Sicherheitseinrichtung nach Anspruch 3, **dadurch gekennzeichnet,** daß bei einem Differenzdruckkolben die Schmelzlotarretierung (25) zusätzlich zwischen Kolbenumfangsflächen (23.2) und Führungsflächen (30) am Innenumfang des Führungszylinders (31) angeordnet ist.

5. Sicherheitseinrichtung nach Anspruch 1 oder 4, **dadurch gekennzeichnet,** daß der Führungszylinder (31) im Armaturengehäuse (220) zentriert so gehalten ist, daß zwischen seinem Außenumfang und dem Innenumfang des Armaturengehäuses ein Ringkanal (27) als Überströmkanal freibleibt,

daß im Ringkanal (27) den Führungszylinder (31) zentrisch halternde Leitflügel (32) angeordnet und mit der Wand des Armaturengehäuses (220) verbunden sind, und

daß der Einlaßquerschnitt des Überströmkanals (27) durch den Druckdifferenzkolben (23) in dessen Normalstellung abgedichtet, dagegen in seiner Auslösestellung freigegeben ist.

6. Sicherheitseinrichtung nach einem der Ansprüche 1, 4 oder 5,

dadurch gekennzeichnet, daß der Führungszylinder (31) an seinem kolben-abgewandten Ende einen Boden (33) mit einer Druckentlastungsöffnung (34) aufweist.

7. Sicherheitseinrichtung nach einem der Ansprüche 1 bis 6,

dadurch gekennzeichnet, daß die Druckentlastungsarmatur (22) in die Wand einer Hauptkühlmittelleitung (10) nahe dem Kernreaktor-Druckbehälter (1) eingesetzt ist.

8. Sicherheitseinrichtung nach einem der Ansprüche 1 bis 6,

dadurch gekennzeichnet, daß die Druckentlastungsarmatur (22) in die Wand des Druckbehälters (1) in Höhe der und zwischen den Hauptkühlmittelleitungsstutzen (4, 9) eingesetzt ist.

9. Sicherheitseinrichtung nach einem der Ansprüche 1 bis 8,

dadurch gekennzeichnet, daß bei entsprechend geringeren Querschnittsabmessungen der Druckentlastungsarmatur (22) und der an diese angeschlossenen Leitungen die Druckentlastungsleitung als Steuerleitung (28') für ein gesondertes Abblaseventil (36) ausgebildet ist.

## Claims

1. Safety device against the overpressure failure of a nuclear reactor pressure vessel in the event of insufficient core cooling, having the following features: a pressure-relief fitting (22), which is inserted into a wall or pipeline (10) of the pressure vessel (1), the said wall or pipeline being exposed to the primary pressure, and which is loaded with differential pressure, has a closing piece (23) which is mounted in a hollow guide cylinder (31) so as to be movable in a longitudinally displaceable manner and is a differential-pressure piston designed as a hollow body and which is held, sealed off, in its closing position by a fusible solder retention (24, 25), but can be moved into its opening position when an upper limit temperature is reached in the reactor interior, the said limit temperature causing the fusible solder retention (24, 25) to melt open on account of a limit-temperature heat flow reaching the latter.

2. Safety device according to Claim 1, characterized in that the pressure-relief fitting (22) is connected to a blow-off conduit (28) opening into a blow-off vessel.

3. Safety device according to Claim 1, characterized in that the fusible solder retention (24) is attached between sealing faces (23.1) of the closing piece (23) and associated seat faces (29) of the pressure-relief fitting (22).

4. Safety device according to Claim 3, characterized in that, in the case of a differential-pressure piston, the fusible solder retention (25) is additionally arranged between piston circumferential faces (23.2) and guide faces (30) on the inner circumference of the guide cylinder (31).

5. Safety device according to Claim 1 or 4, characterized in that the guide cylinder (31) is held, centred, in the fitting housing (220), in such a way that an annular channel (27) remains free as an overflow channel between the outer circumference of the guide cylinder (31) and the inner circumference of the fitting housing, in that guide vanes (32) holding the guide cylinder (31) centrically are arranged in the annular channel (27) and are connected to the wall of the fitting housing (220), and in that the inlet cross-section of the overflow channel (27) is sealed off by the differential-pressure piston (23) in the normal position of the latter, but is opened in its release position.

6. Safety device according to one of Claims 1, 4 or 5, characterized in that the guide cylinder (31) has, at its end facing away from the piston, a bottom (33) with a pressure-relief orifice (34).

7. Safety device according to one of Claims 1 to 6, characterized in that the pressure-relief fitting (22) is inserted into the wall of a main coolant conduit (10) near the nuclear reactor pressure vessel (1).

8. Safety device according to one of Claims 1 to 6, characterized in that the pressure-relief fitting (22) is inserted into the wall of the pressure vessel (1) at the height of and between the connection pieces (4, 9) of the main coolant conduit.

9. Safety device according to one of Claims 1 to 8, characterized in that, in the event of appropriately smaller cross-sectional dimensions of the pressure-relief fitting (22) and of the conduits connected to the latter, the pressure-relief conduit is designed as a control conduit (28') for a separate blow-off valve (36).

## Revendications

1. Dispositif de prévention d'une défaillance due à la surpression d'une cuve sous pression de réacteur nucléaire en cas de refroidissement insuffisant du coeur, ayant les caractéristiques suivantes

   un robinet (22) de détente de pression, chargé par une pression différentielle et monté dans une paroi ou une conduite (10) de la cuve (1) sous pression soumise à la pression primaire, comporte une pièce (23) de fermeture qui est montée coulissante dans un cylindre (31) de guidage creux, qui est un piston de pression différentielle monté en élément creux et qui est maintenu de manière étanche en sa position de fermeture par un blocage (24, 25) en matière de brasure fusible, mais qui, en revanche, lorsqu'est atteinte à l'intérieur du réacteur une température limite supérieure qui provoque la fusion du blocage (24, 25) en matière de brasure fusible, peut être déplacé à sa position d'ouverture.

2. Dispositif de prévention suivant la revendication 1, caractérisé en ce que le robinet (22) de détente de pression est raccordé à une conduite (28) d'évacuation débouchant dans une cuve d'évacuation.

3. Dispositif de prévention suivant la revendication 1, caractérisé en ce que le blocage (24) en matière de brasure fusible est monté entre des surfaces (23.1) étanches de la pièce (23) de fermeture et des surfaces (29) de siège associées du robinet (22) de détente de pression.

4. Dispositif de prévention suivant la revendication 3, caractérisé en ce que, pour un piston de pression différentielle, le blocage (25) en matière de brasure fusible est monté de plus entre des surfaces (23.2) du pourtour du piston et des surfaces (30) de guidage ménagées sur le pourtour intérieur du cylindre (31) de guidage.

5. Dispositif de prévention suivant la revendication 1 ou 4, caractérisé en ce que le cylindre (31) de guidage est maintenu centré dans le corps (220) du robinet de manière que subsiste entre son pourtour extérieur et le pourtour intérieur du corps du robinet un canal (27) annulaire servant de canal de trop-plein, en ce qu'il est monté dans le canal (27) annulaire des ailettes (32) de guidage qui maintiennent de manière centrée le cylindre (31) de guidage et qui sont reliées à la paroi du corps (220) du robinet, et en ce que la section transversale d'entrée du canal (27) de trop-plein est, en sa position normale, rendue étanche par le piston (23) de différence de pression, en sa position de déclenchement en revanche, est dégagée.

6. Dispositif de prévention suivant une des revendications 1, 4 ou 5, caractérisé en ce que le cylindre (31) de guidage comporte à son extrémité éloignée du piston un fond (33) ayant une ouverture (34) de détente de pression.

7. Dispositif de prévention suivant une des revendications 1 à 6, caractérisé en ce que le robinet (22) de détente de pression est monté dans la paroi d'une conduite (10) d'agent de refroidissement principal, à proximité de la cuve (1) sous pression de réacteur nucléaire.

8. Dispositif de prévention suivant une des revendications 1 à 6, caractérisé en ce que le robinet (22) de détente de pression est monté dans la paroi de la cuve (1) sous pression, au niveau des tubulures (4, 9) d'agent de refroidissement principal et entre elles.

9. Dispositif de prévention suivant une des revendications 1 à 8, caractérisé en ce que, pour des dimensions de la section transversale du robinet (22) de détente de pression et des conduites qui y sont raccordées de manière adéquate assez petites, la conduite de détente de pression est agencée en conduite (28') de commande destinée à une vanne (36) d'évacuation séparée.

FIG 1

FIG 2

FIG 3